# EUROPÄISCHE PATENTSCHRIFT

(11) **EP 3 544 412 B1**
(45) Veröffentlichungstag und Bekanntmachung des Hinweises auf die Patenterteilung: **01.04.2020**
(21) Anmeldenummer: 17829926.9
(22) Anmeldetag: 23.11.2017
(51) Int. Cl.: A01K 1/015

(54) **BODENKONSTRUKTIONSELEMENT**
FLOOR CONSTRUCTION ELEMENT
ÉLÉMENT DE CONSTRUCTION AU SOL

(30) Priorität: 23.11.2016 AT 5302016; 10.03.2017 WO PCT/AT2017/060061
(43) Veröffentlichungstag der Anmeldung: 02.10.2019
(73) Patentinhaber: Grabner, Gerhard, 3052 Neustift-Innermanzing (AT)
(72) Erfinder: Grabner, Gerhard, 3052 Neustift-Innermanzing (AT)
(74) Vertreter: Ellmeyer, Wolfgang
(86) Internationale Anmeldenummer: PCT/EP2017/080265
(87) Internationale Veröffentlichungsnummer: WO 2018/096059

(56) Entgegenhaltungen:
- EP-A1- 3 011 830
- WO-A1-2017/152211
- DD-A- 59 427
- JP-A- H08 317 741
- KR-B1- 100 888 066
- US-A1- 2015 334 980

## Beschreibung

Die Erfindung betrifft ein Bodenkonstruktionselement für einen Pferdeeinstellplatz gemäß Anspruch 1, mit einem Deckflächenelement und einer Abstützvorrichtung zur Abstützung gegenüber einem Boden, wobei das Deckflächenelement eine Vielzahl von Durchlassöffnungen aufweist und durch die Abstützvorrichtung zwischen dem Boden und dem Deckflächenelement zumindest ein Ableithohlraum ausgebildet ist, über welchen flüssige Ausscheidungen des Pferdes ausbringbar sind.

Die Haltung von Pferden unterscheidet sich grundsätzlich von der anderer Stalltiere, da Pferde aufgrund ihres Liegeverhaltens und ihres größeren Futter- und Bewegungsbedarfes mehr Freiraum sowie einen weichen Untergrund benötigen und sie sich in einer möglichst staub- und ammoniakfreien Umgebung aufhalten sollen.

Unter Pferdeeinstellplätzen werden dabei im Rahmen dieser Offenbarung insbesondere Pferdestallungen mit Boxen, Pferdefreilaufstallungen, Pferdeanhänger und Pferdetransporter verstanden.

Ein zu harter Boden stellt eine große Beeinträchtigung des Wohlbefindens von Pferden dar und beinhaltet aufgrund der Belastung der Gelenke, Sehnen, Knochen und Hufe ein hohes, ernsthaftes Verletzungsrisiko.

Ferner sind Pferde auch sehr empfindlich gegenüber Verunreinigung ihrer Umgebung durch Fäkalien, weshalb in herkömmlichen Einstellplätzen eine Einstreuschicht vorgesehen ist, welche einen weichen, saugfähigen Untergrund bereitstellt und verhindern hilft, dass sich das Pferd verletzt oder eine größere Flüssigkeitsmenge am Boden ansammelt.

Nachteil dieser Einstreuschichten ist die Vermischung derselben mit Pferdeäpfeln oder Pferdeurin, sodass nach kürzerer Zeit ein kompletter Austausch der Einstreu vorgenommen werden muss, um eine hygienische Beeinträchtigung des Pferdes zu verhindern. Die an sich für Düngungszwecke sehr wertvollen Pferdeausscheidungen können aufgrund der Vermischung von Pferdeurin und Pferdeäpfeln mit Einstreu, insbesondere wenn diese z.B. Hobel- oder Sägespäne enthält, nur begrenzt verwertet werden.

Der in der Einstreu aufgenommene Pferdeurin verursacht neben dem Nässegefühl und der Rutschgefahr für das Pferd eine hohe Ammoniakgaskonzentration in der Stallluft, die eine Geruchsbelästigung und Gesundheitsgefährdung von Mensch und Pferd darstellen kann.

Als nachteilig sind daher der hohe Einstreuverbrauch, die erforderliche Arbeitszeit, der Anfall eines hohen Mistvolumens und die Kosten für die Entsorgung desselben.

Aus der DE 100 27 480 geht ein Boden für Pferdeställe hervor, dessen Elemente zueinander parallele Fugen aufweisen, welche unterseitig mit gemeinsamen Sammelrohren verbunden sind, die ihrerseits an eine Durchspülvorrichtung angeschlossen sind. Nachteil dieser Vorrichtung ist das relativ schnelle Verstopfen der Fugen durch Staub, Pferdemist, Pferdehaare, Schmutz und Steinchen von draußen, den die Pferde in die Box tragen sowie durch Aufquellen der Einstreu. Die Fugen müssen dann einer aufwändigen Reinigung unterzogen werden.

In der WO 94/02003 ist eine elastische Bodenmatte angegeben, welche einen Ersatz des herkömmlichen Stroh- oder Einstreubettes darstellt, wobei Löcher in der Matte und ein darunterliegendes Ableitsystem dafür sorgen, dass die flüssigen Abscheidungen abgeleitet werden können. In dieser Druckschrift wird jedoch nicht beschrieben, wie die festen Pferdeausscheidungen, Staub, Haare, sonstiger Schmutz, Steinchen, etc. daran gehindert werden, dass sie ein Verschließen der Ableitlöcher bewirken oder ein Ausrutschen der Pferde zur Folge haben können. Außerdem werden die Pferde darauf nicht urinieren, weil es dabei auf ihre Beine spritzt und daher tierschutzrechtlich nicht erlaubt ist.

In der JPH 08317741 A ist eine Urinableitvorrichtung beschrieben, bei der eine mit Gummi überzogene Platte als Dämpfungsebene verwendet wird, die an bestimmten Stellen Löcher zur Ableitung des Urins in eine darunterliegende Kanalvorrichtung aufweist, es sind jedoch keine Mittel vorgesehen, die ein Verschließen der Löcher durch feste Bestandteile verhindert. Darüber hinaus gibt es Bereiche der Dämpfungsebene, die keine Löcher aufweisen, an denen es zu einem Flüssigkeitsrückstau und zu einer daraus resultierenden Durchnässung der Einstreu kommt. Wie aus Fig.4 dieser Druckschrift zu erkennen ist, werden die dort beschriebenen Ableitvorrichtungen nebeneinander in Beton eingebettet, sodass zwischen diesen ein relativ großer Abstand entsteht, der nur durch Betonmasse abgedeckt ist, sodass in diesem Bereich keine Urinableitung erfolgt.

Weitere Bodenkonstruktionselemente sind aus US20150334980, EP3011830, DD59427 und KR100888066B bekannt.

Insgesamt sind alle bisherigen Versuche, eine zufriedenstellende Form der Pferdeurinableitung zu finden, daran gescheitert, dass es innerhalb kürzester Zeit zu einer Verlegung der für die Ableitung vorgesehenen Löcher kommt und eine Reinigung derselben nur mit großem Aufwand möglich ist.

Aufgabe der Erfindung ist es daher, ein Bodenkonstruktionselement für einen Pferdeeinstellplatz zu schaffen, mit dem eine starke Verbesserung der vorstehend geschilderten Verhältnisse erreicht werden kann und eine schnellere Stallreinigung, ein geringeres Mistvolumen sowie eine deutliche Verbesserung der hygienischen Bedingungen und Verringerung der Ammoniakkonzentration sowie der gesundheitsgefährdenden Aspekte erzielbar ist.

Weitere Aufgabe ist es, ein eingangs erläutertes Bodenkonstruktionselement anzugeben, dessen Durchlässe in den Ableithohlraum bei Gebrauch einer leicht durchzuführenden Reinigung unterzogen werden können.

Erfindungsgemäß wird dies dadurch erreicht, dass die Durchlassöffnungen über das Deckflächenelement gleichmäßig verteilt angeordnet sind, wobei zwischen den Durchlassöffnungen Stege zur Abstützung oder Versteifung verlaufen, und dass die Durchlassöffnungen jeweils durch eine Anordnung von mehreren Sieböffnungen definiert ist, die im Deckflächenelement ausgebildet sind oder in die Durchlassöffnungen ein Siebelement mit einer Vielzahl von Sieböffnungen eingesetzt ist, wobei die Sieböffnungen für die flüssigen Ausscheidungen durchlässig sind jedoch das Eintreten von relativ großen, festen Teilchen in den zumindest einen Ableithohlraum und das Verstopfen der Durchlassöffnungen verhindern, wobei der Durchmesser oder die Öffnungsweite (k) der Sieböffnungen viel kleiner als der Durchmesser D oder die Öffnungsweite der Durchlassöffnungen ist und die Dicke (C) des Siebelements oder die Tiefe (t) der Sieböffnungen viel kleiner als der Durchmesser D oder die Öffnungsweite der Durchlassöffnungen ist.

Es können dabei mehrere identische Deckflächenelemente zu einer durchgehenden Fläche innerhalb eines Pferdeinstellplatzes zusammengesetzt werden, die gegenüber dem Boden beabstandet ist.

Das Deckflächenelement bietet eine Auflage für die Streuschicht und schafft durch die Beabstandung zum Boden den Ableithohlraum, in den die Ausscheidungen abgeleitet werden können. Somit ist das Deckflächenelement flüssigkeitsdurchlässig und sorgt damit während des Strahlvorganges für eine rasche Ableitung der flüssigen Ausscheidungen des eingestellten Pferdes, die hauptsächlich aus Pferdeurin bestehen, in den unterhalb des Deckflächenelements ausgebildeten Hohlraum. Auf diese Weise kommt die Einstreuschicht, die notwendig ist, damit das Pferd am Einstellplatz uriniert (strahlt), im Wesentlichen nur im Ausmaß des Strahldurchmessers mit Flüssigkeit in Berührung und ist diese, im Gegensatz zu bisher verwendetem Einstreumaterial, bevorzugt nur sehr gering saugfähig ausgebildet und daher zur Aufnahme von Flüssigkeit nur wenig geeignet. Als Folge davon kommt es zu keiner nennenswerten Flüssigkeitsspeicherung innerhalb der Einstreuschicht, die z.B. aus Holzgranulat bestehen kann, wodurch diese ihre für das Pferd schonende Funktion beibehält und längere Zeit innerhalb des Pferdeeinstellplatzes belassen werden kann. Als Folge davon ergibt sich insgesamt eine geringere Ammoniakbelastung und eine Einsparung an Einstreu und abzuführenden Mist. Die Reinigung eines erfindungsgemäß aufgebauten Einstellplatzes erleichtert sich dadurch erheblich und es können die entstehenden Abfallprodukte in einer sehr hohen Reinheit weiterverarbeitet werden.

Die über das Deckflächenelement gleichmäßig verteilten Durchlassöffnungen sollen einen derart großen Durchmesser oder Öffnungsweite aufweisen, dass diese einen möglichst geringen Strömungswiderstand gegenüber dem abfließenden Pferdeurin darstellen. Als obere Grenze für den Durchmesser oder die Öffnungsweite der Durchlassöffnungen ist jene Öffnungsweite anzusehen, bei der aus Gründen der Sicherheit für das Pferd ein Eindringen des Pferdehufes in die Durchlassöffnung noch verhindert wird. Zugleich muss zwischen jeweils benachbarten Durchlassöffnungen genügend Material des Deckflächenelements verbleiben, um eine ausreichende mechanische Stabilität zu gewährleisten und um die Belastung durch ein Pferd aufnehmen zu können.

Durch das Vorsehen von Sieböffnungen in den Durchlassöffnungen im Bereich der Oberseite der Dämpfungsebene wird das Eindringen von festen Teilchen, z.B. Einstreuteilchen aus der Einstreuschicht in diese verhindert und es können zugleich die flüssigen Ausscheidungen ungehindert abgeleitet werden.

Die erfindungsgemäßen Sieböffnungen können durch in die Durchlassöffnungen eingesetzte Siebelemente gebildet sein oder es können die Durchlassöffnungen durch Anordnungen von Sieböffnungen unmittelbar im Deckflächenelement definiert sein, die durch Stege voneinander getrennt sind, um die nötige Festigkeit und Abstützmöglichkeiten nach unten hin zu bieten.

Wie sich herausgestellt hat, sind die Sieböffnungen so zu dimensionieren, dass die Durchtrittslänge der Sieböffnungen sehr gering ist, um ein Verlegen der Sieböffnungen durch Ablagerungen zu vermeiden, was dadurch erreicht wird, dass das vorzugsweise flächige Siebelement bzw. der Siebgitterbereich des Siebelements oder das Deckflächenelement mit den darin ausgebildeten Sieböffnungen eine sehr geringe Dicke aufweist, sodass eine geringe Durchtrittslänge der Sieböffnungen besteht, die eine Anlagerung von festen Verunreinigungen verhindert und die eine einfache Reinigung der Siebelemente erlaubt. Es genügt z.B. ein Luft- oder Wasserstrahl, um die Sieböffnungen durchzublasen. Selbst wenn das Pferd strahlt und der Urin auf den Sieböffnungen auftrifft, hat der Strahl in diesem Fall auch eine spülende Wirkung.

Die Sieböffnungen können gemäß einer weiteren Ausführungsform der Erfindung sich nach unten hin konisch öffnen, um das Verstopfen derselben zu verhindern.

Aufgrund der vorhandenen Sieböffnungen wird die Einstreu daran gehindert, in die Durchlassöffnungen einzudringen und kann es nicht zu einem Aufquellen der Einstreu in den Durchlassöffnungen und zu einem schnellen Verstopfen derselben kommen, da es nun keine Öffnung oder kein Loch mehr gibt, wo sich die Einstreu sammeln und durch Nässe, die sich beim Strahlen zwangsweise ergibt, die Einstreu aufquillt und sich dadurch in dem Loch verdichtet und den Flüssigkeitsdurchfluss behindert.

Ein Einstreuwechsel ist bei dem erfindungsgemäßen Bodenkonstruktionselement eigentlich fast nicht mehr notwendig. Die Einstreu wird nur in gewissen Abständen von ca 1 Monat mit einem Rütteletagensieb wieder aufbereitet, indem gewisse kleine Teilchen, wie Pferdemist, Staub, Pferdehaare und sonstiger Schmutz oder Steinchen, den bzw. die die Pferde in die Box tragen, ausgesiebt werden. Die Einstreu ist dann wieder auf höchstem Niveau einsetzbar. Im Zuge dessen wird dann auch die Box, z.B. mittels eines Staubsaugers ausgesaugt und von Staub befreit, wobei die Sieböffnungen dabei, falls notwendig, einfach und rasch gereinigt werden. Ein besonders hygienischer Zustand kann auch erreicht werden, indem die Sieböffnungen oder die Siebelemente mit einem einfachen Gartenschlauch mit Wasser abgewaschen und von oben nach unten durchgewaschen werden können. In Kliniken kann man die Reinigung auch sehr leicht mit Desinfektionsmitteln vornehmen.

In weiterer Ausbildung der Erfindung können die Durchlassöffnungen matrixförmig angeordnet sein, um eine möglichst dichte und gleichmäßige Verteilung der Durchlassöffnungen zu gewährleisten.

In weiterer Ausbildung der Erfindung können die Durchlassöffnungen einen kreisförmigen Querschnitt aufweisen, es sind aber alle anderen Formen von Querschnitten, z.B. viereckig, quadratisch, fünfeckig, sechseckig, oval etc. ebenso ausführbar. Der Durchmesser oder die Öffnungsweite der Durchlassöffnungen kann auch innerhalb des Deckflächenelements variieren, sodass z.B. in der Mitte der Dämpfungsebene größere und am Rand kleinere Durchlassöffnungen vorgesehen sein können.

Der Durchmesser der Durchlassöffnungen kann in einem Bereich von 5 mm bis 50 mm gewählt werden, wobei aber auch je nach Bedarf kleinere oder größere Durchlassöffnungen zur Anwendung gelangen können.

Um auch den Einsatz von Materialien mit geringer Festigkeit und großer Elastizität für das Deckflächenelement zu ermöglichen, kann das Deckflächenelement eine Deckplatte umfassen, die an der Unterseite wegstehende Abstützungs- und/oder Versteifungsrippen aufweist, um eine zu starke Durchbiegung bei Belastung zu vermeiden.

Zur Schonung des eingestellten Pferdes und zur Verletzungsvermeidung kann die Deckplatte z.B. aus einem elastischen Material gebildet sein, das eine bessere Dämpfung von Stößen bewirkt. Gemäß einer weiteren Ausbildung der Erfindung kann an der Oberseite der Deckplatte eine Dämpfungsschicht angebracht oder eine Dämpfungsplatte aus einem elastischen Material angeordnet sein.

Gemäß einer weiteren Ausführungsform können die Sieböffnungen in der Deckplatte ausgebildet sein.

Weiters kann vorgesehen sein, dass das Siebelement durch einen hohlen Einsatz gebildet ist, der in die jeweilige Durchlassöffnung eingepasst ist, und dass das obere Ende des hohlen Einsatzes ein Gittersieb aufweist.

Gemäß einem weiteren Ausführungsbeispiel der Erfindung können die hohlen Einsätze in die Durchlassöffnungen der Deckplatte eingeklebt oder eingegossen sein.

Ferner können die Siebelemente hülsenförmig ausgebildet sein und in die Durchlassöffnungen einschiebbar sein. Auf diese Weise können sie bei Beschädigung leicht ausgetauscht oder auch leicht gereinigt werden. Sie können z.B., ohne darauf eingeschränkt zu sein, aus Kunststoff hergestellt, z.B. spritzgegossen, oder aus Metall gebildet sein.

Ferner können die Siebelemente mit den Durchlassöffnungen fest verbunden sein, um zu verhindern, dass sie sich aus den Durchlassöffnungen herausbewegen können.

Es können die Siebelemente auch in die Deckflächenelement integriert sein, indem sie z.B. in diese einvulkanisiert sind.

Eine weitere Ausführungsform der Erfindung kann darin bestehen, dass das obere Ende des hohlen Einsatzes ein Gittersieb aufweist.

Die Öffnungsdurchmesser des Gittersiebes können beliebig gewählt werden, z.B. in einem Bereich von 1mm bis 10mm oder größer, vorzugsweise von 1mm bis 5mm, wobei die Funktion des Zurückhaltens von festen Teilchen und das Hindurchleiten der flüssigen Anteile erfüllt bleiben muss.

Die Gittersiebe können bei der Oberfläche, wo sich die Durchlassöffnungen befinden nicht nur gerade sondern auch vom äußeren Rand zur Mitte leicht fallend sein und die Flüssigkeit dadurch noch besser ableiten.

Ein Ausführungsbeispiel der Erfindung kann darin bestehen, dass das Siebelement hohlzylindrisch ist und an seinem unteren Ende einen Flansch aufweist, mit welchem das Siebelement im eingesetzten Zustand auf der Unterseite des Deckflächenelements aufsitzt, wobei vorzugsweise das Gittersieb des Einsatzes gegenüber der Oberseite des Deckflächenelements nach unten versetzt ist, sodass das Pferd mit dem Siebelement nicht in Berührung gelangen kann.

Um die Siebelemente vor starken Belastungen durch das Pferd zu schützen, kann im weiterer Ausbildung der Erfindung das Siebelement im Inneren zumindest einen Verstärkungssteg aufweisen, der vorzugsweise diametrisch und kreuzförmig angeordnet ist.

Es können im Rahmen der Erfindung auch andere Arten der Verstärkung durch Erhöhung der Wandstärke des Siebelements od. dgl. vorgesehen sein.

Gemäß einer Weiterbildung der Erfindung kann das Siebelement aus einem thermoplastischen Elastomer aus der Gruppe der TPE-V oder einem schlagfesten Polypropylen-Copolymer gebildet, insbesondere spritzgegossen sein. Dadurch ist eine ausreichend hohe Elastizität, Schlagzähigkeit und Ermüdungsbeständigkeit gegeben.

Das Siebelement kann aber auch aus anderen geeigneten Materialien hergestellt sein, die gegenüber einer mechanischen Einwirkung von außen beständig sind.

Durch eine kleine Versetzung der Siebelemente gegenüber des Deckflächenelements nach unten ergibt sich ein kleiner Abstand zur Oberseite des Deckflächenelements, damit die Siebelemente vor den mechanischen Einwirkungen der Pferdehufe besser geschützt sind und das Pferd seinerseits im liegenden Zustand nicht mit den Siebelementen in Berührung gelangen kann. Es kann aber auch auf die Versetzung der Siebelemente verzichtet werden, sodass diese bündig mit der Oberseite des Deckflächenelements abschließen.

In weiterer Ausbildung der Erfindung kann das Deckflächenelement ein tragendes Gitterelement umfassen und auf dem Gitterelement kann eine Dämpfungsplatte aus einem elastischen Material angebracht oder angeordnet sein, wobei die Durchlassöffnungen in der Dämpfungsplatte vorgesehen sind, welche Durchlassöffnungen mit Gitteröffnungen des Gitterelements fluchtend angeordnet sind, und die Siebelemente in den Durchlassöffnungen der Dämpfungsplatte eingelassen oder eingeklebt sind.

Auf diese Weise kann oberhalb des tragenden Gitterelements eine Dämpfungsplatte aus einem elastischen Material vorgesehen sein, um eine möglichst vorteilhafte Schonung des eingestellten Pferdes zu ermöglichen. Die Durchlassöffnungen sind dabei so angeordnet, dass jeweils oberhalb einer der Gitteröffnungen des Gitterelements liegen, um einen raschen und widerstandslosen Abfluss der flüssigen Pferdeausscheidungen zu ermöglichen.

Das Deckflächenelement kann in unterschiedlicher Weise gelagert sein, wobei eine hohe mechanische Stabilität und ein einfacher konstruktiver Aufbau dadurch erzielt werden kann, dass die Abstützvorrichtung zwei durch eine Bodenwand voneinander beabstandete seitliche Stützwände aufweist, auf die das Deckflächenelement aufsetzbar ist. Auf diese Weise ist auch ein modularer Aufbau gewährleistet, der es ermöglicht, dass beliebig viele Deckflächenelemente aneinandergereiht werden können, um die gesamte Grundfläche eines Pferdeeinstellplatzes damit abzudecken.

Um eine möglichst rasche Ableitung der Ausscheidungen zu erreichen, können entsprechende Steigungen und Führungen vorgesehen sein, um die Ausscheidungsflüssigkeiten gezielt abzuführen, zugleich sind aber im Inneren des Ableithohlraumes Abstützpunkte vorzusehen, um das den Ableithohlraum überspannende Deckflächenelement entsprechend abzustützen, sodass das von oben wirkende Gewicht des Pferdes nicht eine zu starke Durchbiegung des Deckflächenelements hervorruft.

In weiterer Ausbildung der Erfindung kann daher vorgesehen sein, dass die Bodenwand der Abstützvorrichtung parallele Rinnen zur Ableitung der flüssigen Ausscheidungen ausbildet, und dass an den Verbindungslinien von benachbarten Rinnen Aufstützflächen ausgebildet sind, auf denen die inneren Abstützstege der Deckplatte im aufgesetzten Zustand des Deckflächenelements aufliegen.

Bei einem modularen Aufbau ist es weiters erforderlich, eine durchgehende Ableitung der flüssigen Ausscheidungen durch mehrere erfindungsgemäße Bodenkonstruktionselemente hindurch vorzusehen, sodass diese z.B. einem Sammelkanal zugeführt werden können.

Gemäß einer weiteren Ausführungsform der Erfindung können daher die parallelen Rinnen gegenüber den Stützwänden an einem Ende vorspringend und am gegenüberliegenden Ende zurückversetzt ausgebildet sein, sodass die vorspringenden Rinnenabschnitte mit den zurückversetzten Rinnenabschnitten zweier benachbarter Bodenkonstruktionselemente stirnseitig in Eingriff bringbar und mittels Dichtungselement dichtend verbindbar sind.

Um das Aneinanderreihen von mehreren erfindungsgemäßen Bodenkonstruktionselementen zu erleichtern und ohne Spaltbildung zwischen benachbarten Elementen präzise zu gestalten, kann vorgesehen sein, dass an den Außenseiten der einander gegenüberliegenden Stützwände Nut- und Federelemente angeordnet sind, sodass jeweils zwei benachbarte Bodenkonstruktionselemente an ihrer Stützwandseite miteinander in Eingriff bringbar sind.

Gemäß einer weiteren Variante der Erfindung kann die Bodenwand als Schrägebene und an der tiefsten Stelle der Schrägebene eine Abflussbohrung sowie im Bereich der höchsten Stelle eine Spülbohrung zum Anschluss an eine Spülleitung ausgebildet sein, um eine vorteilhafte Spülung des erfindungsgemäßen Bodenkonstruktionselements zu ermöglichen.

Um bei einem unebenen Untergrund die unterschiedlichen Höhen des Bodens besser auszugleichen kann gemäß einer weiteren Variante der Erfindung ein Stützrahmen zur Auflage des Deckflächenelements ausgebildet sein, durch den Spülleitungen hindurchgeführt sind, und der an seiner Unterseite durch Stützfüße gegenüber dem Boden gelagert ist, wobei der Stützrahmen Ausnehmungen aufweist, durch die die flüssigen Ausscheidungen wegleitbar sind.

Nachfolgend wird die Erfindung anhand der in den beigefügten Zeichnungen gezeigten Ausführungsbeispiele eingehend erläutert. Es zeigen dabei
Fig.1 eine Ansicht von oben eines Details einer Ausführungsform eines erfindungsgemäßen Bodenkonstruktionselements;
Fig.2 einen Schnitt K-K der Ausführungsform gemäß Fig. 1;
Fig.3 eine Seitenansicht der Ausführungsform gemäß Fig.1;
Fig.4 eine Draufsicht auf die Ausführungsform gemäß Fig.1;
Fig.5 eine Ansicht der Ausführungsform gemäß Fig.1 von unten;
Fig.6 einen Schrägriß der Ausführungsform gemäß Fig.1;
Fig.7 einen Schnitt H-H durch die Ausführungsform gemäß Fig.1;
Fig.8 eine Explosionsdarstellung der Ausführungsform gemäß Fig.1;
Fig.9 ein Detail eines Schnitts der Ausführungsform gemäß Fig. 1;
Fig.10 einen Schnitt K-K durch eine weitere Ausführungsform des erfindungsgemäßen Bodenkonstruktionselements;
Fig.11 eine Seitenansicht der Ausführungsform gemäß Fig.10;
Fig.12 eine Draufsicht auf die Ausführungsform gemäß Fig.10;
Fig.13 einen Schnitt H-H der Ausführungsform gemäß Fig.10;
Fig.14 eine Schrägansicht der Ausführungsform gemäß Fig. 10;
Fig.15 eine Explosionsdarstellung der Ausführungsform gemäß Fig.10;
Fig.15A bis 15D eine Draufsicht, eine Seitenansicht, einen Schnitt C-C und eine Schrägansicht eines Siebelements der Ausführungsform gemäß Fig.10 in Vergrößerung;
Fig.16 einen Schnitt K-K durch eine weitere Ausführungsform des erfindungsgemäßen Bodenkonstruktionselements;
Fig.17 eine Seitenansicht der Ausführungsform gemäß Fig.16;
Fig.18 eine Draufsicht auf die Ausführungsform gemäß Fig.16;
Fig.19 einen Schnitt H-H durch die Ausführungsform gemäß Fig.16:
Fig.20 eine Schrägansicht der Ausführungsform gemäß Fig. 16;
Fig.21 eine Explosionsdarstellung der Ausführungsform gemäß Fig.16;
Fig.22 einen Schnitt K-K durch eine weitere Ausführungsform des erfindungsgemäßen Bodenkonstruktionselements;
Fig.23 eine Seitenansicht der Ausführungsform gemäß Fig.22;
Fig.24 eine Draufsicht auf die Ausführungsform gemäß Fig.22;
Fig.25 einen Schnitt H-H durch die Ausführungsform gemäß Fig.22:
Fig.26 eine Schrägansicht der Ausführungsform gemäß Fig. 22;
Fig.27 eine Explosionsdarstellung der Ausführungsform gemäß Fig.22;
Fig.28 einen Schnitt K-K durch eine weitere Ausführungsform des erfindungsgemäßen Bodenkonstruktionselements;
Fig.29 eine Seitenansicht der Ausführungsform gemäß Fig.28;
Fig.30 eine Draufsicht auf die Ausführungsform gemäß Fig.28;
Fig.31 einen Schnitt H-H durch die Ausführungsform gemäß Fig.28:
Fig.32 eine Ansicht der Ausführungsform gemäß Fig. 28 von unten;
Fig.33 eine Schrägansicht der Ausführungsform gemäß Fig. 28;
Fig. 34 eine Explosionsdarstellung der Ausführungsform gemäß Fig.28;
Fig.35 ein Detail einer weiteren Ausführungsform des erfindungsgemäßen Bodenkonstruktionselements;
Fig.36 einen Schnitt J-J der Ausführungsform gemäß Fig. 35;
Fig.37 eine Seitenansicht der Ausführungsform gemäß Fig.35;
Fig.38 eine Draufsicht auf die Ausführungsform gemäß Fig.35;
Fig.39 ein weiteres Detail der Ausführungsform gemäß Fig.35;
Fig.40 einen Schnitt durch die Ausführungsform gemäß Fig.35;
Fig. 41 eine Explosionsdarstellung der Ausführungsform gemäß Fig.35;
Fig.42 einen Schnitt J-J einer weiteren Ausführungsform des erfindungsgemäßen Bodenkonstruktionselements;
Fig.43 eine Seitenansicht der Ausführungsform gemäß Fig.42;
Fig.44 eine Draufsicht auf die Ausführungsform gemäß Fig.42;
Fig.45 eine Schrägansicht der Ausführungsform gemäß Fig.42;
Fig.46 eine Explosionsdarstellung der Ausführungsform gemäß Fig.42.

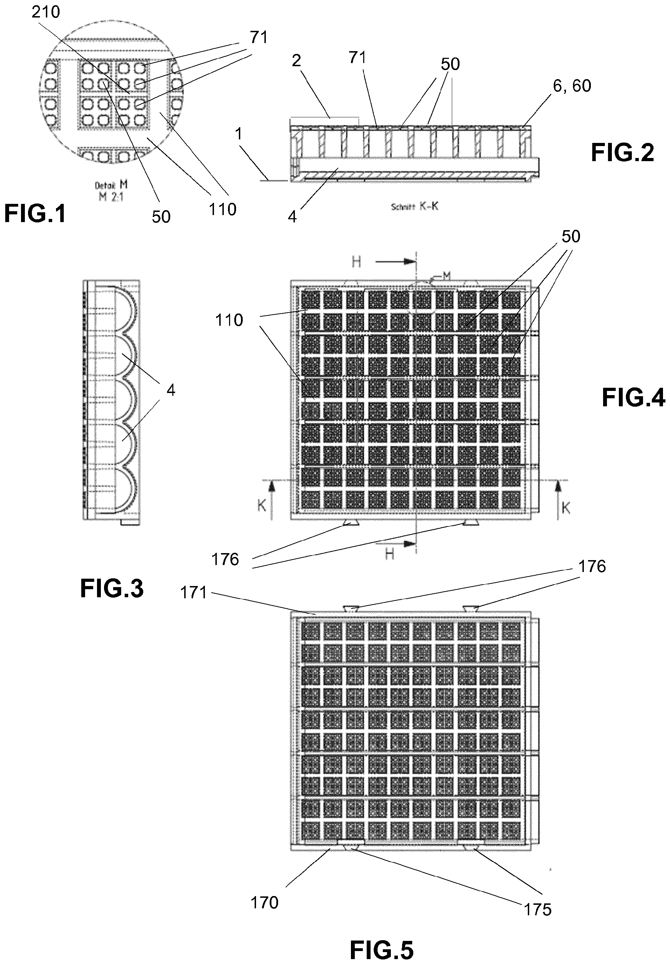

Fig.1 bis 9 zeigen ein Bodenkonstruktionselement für einen Pferdeeinstellplatz mit einem von einem Boden 1 im Wesentlichen parallel beabstandeten Deckflächenelement 6, auf dessen Oberseite im Zustand des Gebrauchs eine Einstreuschicht 2 (Fig.2) aufgebracht ist, wobei durch eine Abstützvorrichtung 170, 171 zwischen dem Boden 1 und dem Deckflächenelement 6 ein Ableithohlraum 4 ausgebildet ist, über den flüssige Ausscheidungen eines Pferdes ausbringbar sind.

Die Abstützvorrichtung weist zwei durch eine Bodenwand 173 voneinander beabstandete seitliche Stützwände 170, 171 auf, auf die das Deckflächenelement 6 aufsetzbar ist.

Das Deckflächenelement 6 ist im gezeigten Ausführungsbeispiel- ohne darauf beschränkt zu sein- mit einer quadratischen Grundfläche mit den Maßen 300 x 300 mm ausgeführt. Durch flächige Verlegung mehrerer Deckflächenelemente 6 dicht an dicht kann der jeweilige Einstellplatz vollkommen abgedeckt werden, um auf die dadurch entstehende Fläche eine Einstreuschicht aufbringen zu können. Die verlegten Deckflächenelemente bilden dadurch eine Einstellfläche mit gleichmäßig verteilten Durchgangslöchern zur Ableitung der flüssigen Ausscheidungen. Bevorzugt weist der darunter liegende Boden ein Gefälle auf oder es wird ein solches künstlich hergestellt.

Die Bodenwand 173 der Abstützvorrichtung bildet parallele Rinnen 180 zur Ableitung der flüssigen Ausscheidungen aus, wobei im gezeigten Ausführungsbeispiel fünf parallele halbzylindrische Rinnen 180 vorgesehen sind, die sich parallel zu den beiden seitlichen Stützwänden 170, 171 erstrecken. Die Gestaltung der Ablaufrinnen ist jedoch nicht erfindungswesentlich und kann im Rahmen der Erfindung variieren.

Die parallelen Rinnen 180 sind gegenüber den Stützwänden 170, 171 an einem Ende vorspringend und am gegenüberliegenden Ende zurückversetzt ausgebildet, sodass die vorspringenden Rinnenabschnitte 181 mit den zurückversetzten Rinnenabschnitten 182 zweier benachbarter Bodenkonstruktionselemente stirnseitig in Eingriff bringbar und mittels nicht dargestellten Dichtungselementen dichtend verbindbar sind.

Weiters sind an den Außenseiten der einander gegenüberliegenden Stützwände 170, 171 Nut 175- und Federelemente 176 angeordnet, sodass jeweils zwei benachbarte Bodenkonstruktionselemente an ihrer Stützwandseite miteinander in Eingriff bringbar sind.

In diesem Zusammenhang wird darauf hingewiesen, dass im Rahmen der Beschreibung unter Pferdeeinstellplätzen alle Einrichtungen zur Unterbringung und/oder zum Transport von Pferden, wie Pferdestallungen mit Boxen, Pferdefreilaufstallungen, Pferdeanhänger, Pferdetransporter etc. verstanden werden. Derartige Einrichtungen sind spezifisch für Pferde konzipiert und berücksichtigen die Besonderheiten der Pferdehaltung. Die Einstreuschicht 2 hat mehrere Funktionen, unter anderem schützt sie vor Verletzungen und bietet auch eine Unterlage, auf dem das Pferd sich niederlegen bzw. ruhen oder schlafen kann. Weiters verhindert die Einstreuschicht 2 das Spritzen während des Urinstrahlens, welches bei Pferden dazu führen kann, dass sie die Urinabgabe unterbrechen, was zu einer Harnverhaltung führen kann. Der Boden 1 ist z.B. der in einer Pferdebox vorhandene Untergrund, aus z.B. Beton, Lehm, Estrich etc.

Zur Verhinderung von Verletzung und zur Schonung der Gelenke des eingestellten Pferdes ist das Deckflächenelement 6 aus einem elastischen Material wie z. B. einem Kunststoff ausgebildet, um einen guten Stand und die erforderliche Dämpfungswirkung für das Pferd zu bewirken, zumindest ist aber das Deckflächenelement 6 an seiner Oberseite elastisch ausgebildet ist oder es ist zumindest eine elastische Schicht vorhanden.

Das Deckflächenelement 6 weist somit ausreichende elastische Eigenschaften auf, um eine huf- und gelenkschonende Art der Unterbringung zu gewährleisten. Weiters verhindert das Deckflächenelement 6 auch, dass sich Pferde beim Hinlegen oder Aufstehen verletzen. Das Deckflächenelement 6 weist eine Vielzahl von quadratischen Durchlassöffnungen 50 zur Ableitung der flüssigen Ausscheidungen in den Ableithohlraum 4 auf.

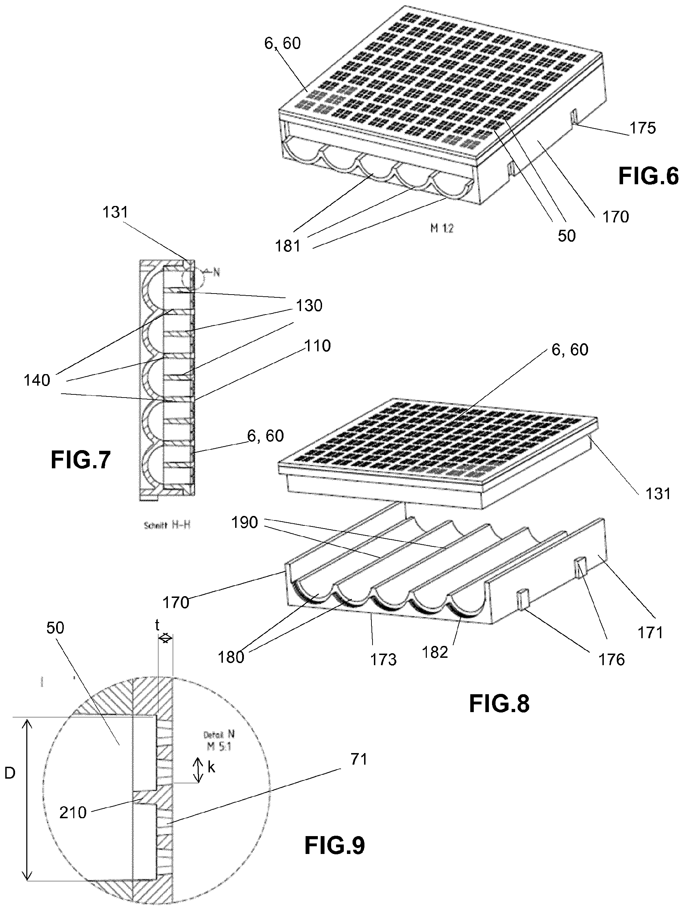

Das Deckflächenelement 6 ist als eine Deckplatte 60 ausgebildet, die an der Unterseite wegstehende Abstützungs- 140 und Versteifungsrippen 130 aufweist (Fig.7), die aus einem anderen, härteren Material bestehen als die Deckplatte 60. Bei der Herstellung des Deckflächenelements 6 werden die weichere Deckplatte 60 und die härteren Abstützungsrippen140 und Versteifungsrippen 130 sowie ein diese umgebender Rahmen 131 aber in einem Durchgang geformt, sodass letztere einstückig mit der Deckplatte 60 verbunden sind.

An den Verbindungslinien von benachbarten Rinnen 180 sind Aufstützflächen 190 ausgebildet, auf denen die inneren Abstützstege 140 der Deckplatte 60 im aufgesetzten Zustand des Deckflächenelements 6 aufliegen.

Erfindungsgemäß sind die Durchlassöffnungen 50 über das Deckflächenelement gleichmäßig verteilt angeordnet sind, wobei zwischen den Durchlassöffnungen 50 Stege 110 (Fig.1) zur Abstützung oder Versteifung verlaufen, und die Durchlassöffnungen 50 jeweils durch eine Anordnung von mehreren Sieböffnungen 71 definiert ist, wobei die Sieböffnungen 71 für die flüssigen Ausscheidungen durchlässig sind jedoch das Eintreten von relativ großen, festen Teilchen in den zumindest einen Ableithohlraum 4 und das Verstopfen der Durchlassöffnungen 50 verhindern (Fig.9).

Wie in Fig. 7 gezeigt sind die Abstützungsrippen 140 und die Versteifungsrippen 130 genau unterhalb der Stege 110 angeordnet, um die Deckplatte 60 auszusteifen und abzustützen. Die Dicke der Deckplatte beträgt ca. 5mm und ist im Bereich mit den Sieböffnungen auf 2mm ausgedünnt, sodass die Sieböffnungen ca. 2mm tief sind.

Die die Durchlassöffnungen 50 ausbildenden Anordnungen von Sieböffnungen 71 sind durch Durchgangslöcher in der Deckplatte 60 ausgebildet. Fig.1 zeigt ein Detail mit einer der Durchgangsöffnungen 50, die durch insgesamt 16 Sieböffnungen 71, z.B. mit einem Durchmesser von 3mm, definiert ist, sodass sich ein Durchgangsloch von ca. 20x20 mm ergibt, und durch Stege 110 mit einer Breite von z.B. 8 mm, von den benachbarten Durchgangsöffnungen getrennt ist. Im Inneren der Durchgangsöffnungen sind zusätzliche kreuzförmige Versteifungsstege 210 vorgesehen (Fig.1 und Fig. 9), um ein Eindrücken durch einen Pferdehuf zu vermeiden. Die Sieböffnungen 71 öffnen sich konisch nach unten hin, um ein besseres Abrinnen der flüssigen Ausscheidungen zu ermöglichen. Die Stege 110 und die Versteifungsstege 210 dienen der Verstärkung und sollen möglichst geringe Breite aufweisen jedoch ausreichend breit sein, um die Sieböffnungen 71 gegen ein Durchbrechen zu schützen.

Die Durchlassöffnungen 50 sind matrixartig angeordnet, es kann aber auch eine davon abweichende Form der Anordnung getroffen werden.

Um das Eintreten von relativ großen, festen Teilchen durch die Durchlassöffnungen 50 in den Ableithohlraum 4 und das Verstopfen der Durchlassöffnungen 50 zu verhindern, ist der Durchmesser oder die Öffnungsweite k der Sieböffnungen 71 viel kleiner als der Durchmesser D oder die Öffnungsweite der Durchlassöffnungen 50 und die Tiefe t der Sieböffnungen 71 viel kleiner als der Durchmesser D oder die Öffnungsweite der Durchlassöffnungen 50 (Fig.9).

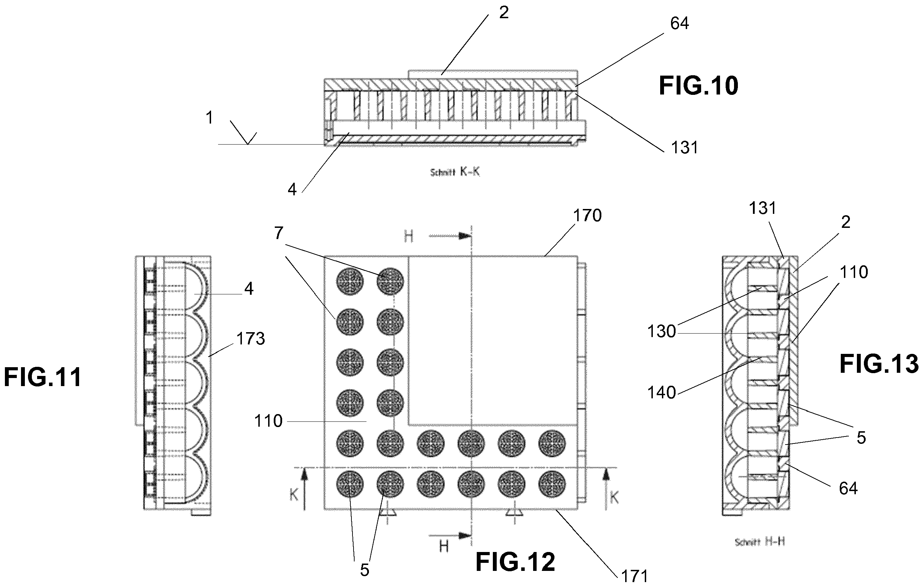

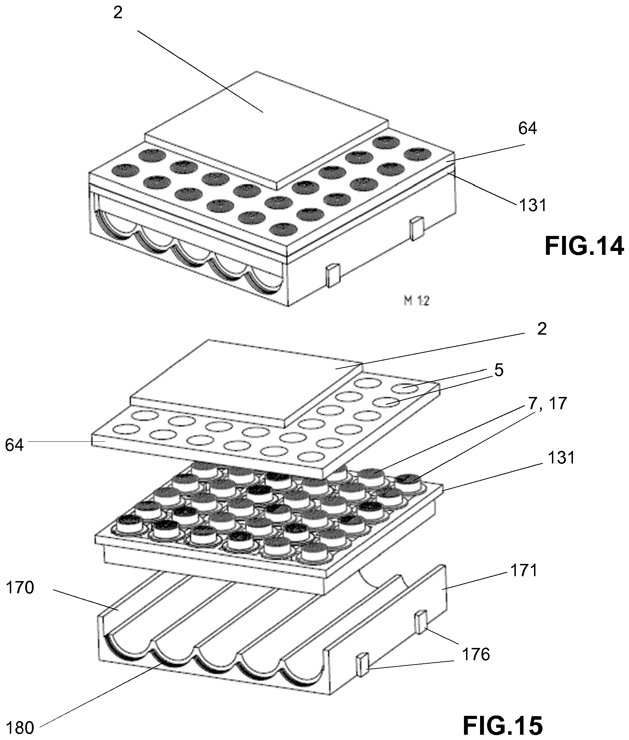

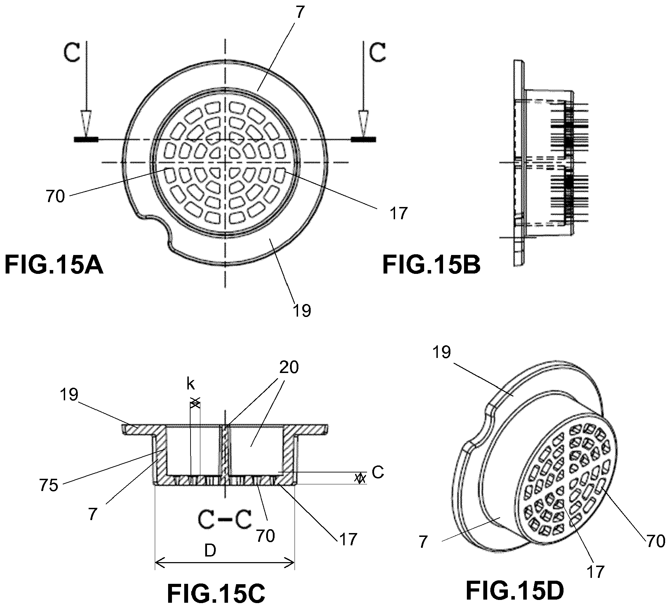

Eine weitere Ausführungsform der Erfindung ist in den Fig. 10 bis 15 gezeigt, bei der die Durchlassöffnungen 5 über das Deckflächenelement 64 gleichmäßig verteilt angeordnet und durch Stege 110 voneinander getrennt sind (Fig.12). In allen Durchlassöffnungen 5 ist jeweils ein Siebelement 7 mit einer Vielzahl von Sieböffnungen 70 eingesetzt, welche für die flüssigen Ausscheidungen durchlässig sind jedoch das Eintreten von relativ großen, festen Teilchen in den Ableithohlraum 4 und das Verstopfen der Durchlassöffnungen 5 verhindern (Fig.15A bis Fig.15D).

Der Durchmesser oder die Öffnungsweite k der Sieböffnungen 70 ist viel kleiner als der Durchmesser D oder die Öffnungsweite der Durchlassöffnungen 5 und die Dicke C des Siebelements 7 oder die Tiefe der Sieböffnungen 70 ist viel kleiner als der Durchmesser D oder die Öffnungsweite der Durchlassöffnungen 5 ist.

Das Siebelement 7 ist durch einen hohlen Einsatz 75 gebildet, der in die jeweilige Durchlassöffnung 5 einer Deckplatte 64 eingepasst ist, wobei das obere Ende des hohlen Einsatzes 75 ein Gittersieb 17 und das untere Ende einen Flansch 19 aufweist (15D). Die Tiefe t der Sieböffnungen 71 entspricht dabei der Dicke des Gittersiebs 17, welche aus Gründen der besseren Ableitung eben sehr dünn gehalten ist. Zur Versteifung des sehr dünnen Gittersiebs 17 sind kreuzförmige Verstärkungsstege 20 im Inneren des hohlen Einsatzes 75 ausgebildet.

Die Siebelemente 75 sind in die Durchlassöffnungen 5 der Deckplatte 64 eingesetzt vorzugsweise eingeklebt wie aus Fig.14 ersichtlich ist, wobei in Gebrauchslage das Gittersieb 17 nach oben orientiert ist.

Die Sieböffnungen 70 öffnen sich konisch - in Gebrauchslage - in Richtung nach unten zum Boden hin - sind also statt kegelstumpfförmig ausgebildet, um ein Verstopfen oder Verlegen besser hintanzuhalten. Der Kegelwinkel ist im Bereich zwischen 5° und 15°, vorzugsweise 10° ausgebildet.

Die in den Fig. 10 bis 15D gezeigten Ausführungsformen weisen kreisförmige Durchlassöffnungen 5 auf, diese können aber auch jegliche andere Form, z.B. n-eckig, oval oder langlochartig etc. haben.

Die Deckplatte 64 mit der Vielzahl von in Dickenrichtung verlaufenden Durchlassöffnungen 5 ist aus einem Material mit relativ hoher Elastizität gebildet ist, z.B. aus Gummi, Schaumstoff, od. dgl.

Getragen wird die Deckplatte 64 von einem Rahmen 131, der mit Abstützrippen 140 und Versteifungsrippen 130 versehen ist, welche Öffnungen zur Ableitung der flüssigen Ausscheidungen in den Ableithohlraum 4 ausbilden.

Die Durchlassöffnungen 5 weisen einen kreisförmigen Durchmesser auf und sind matrixförmig angeordnet, könnten aber auch in einer beliebigen anderen Form, z.B. quadratisch, sechseckig, etc. oder Anordnung vorgesehen sein. Der Durchmesser der Durchlassöffnungen 5 kann z.B. aus einem Bereich von 5 mm bis 50 mm ausgewählt sein, es können aber auch andere Durchmesser ausgebildet sein.

Um möglichst keine Ansammlungen von Flüssigkeit oberhalb der Deckplatte 64 zuzulassen, sind die Durchlassöffnungen 5 nahe beieinander angeordnet. Um eine ausreichende Standfläche für das einzustellende Pferd und eine entsprechende Festigkeit zu bieten, müssen die Zwischenräume bzw. Stege zwischen den Durchlassöffnungen 5 jedoch ausreichend groß gehalten sein.

Das Siebelement 7 ist in die jeweilige Durchlassöffnung 5 eingepasst, sodass Durchmesser D der Durchlassöffnungen 5 ungefähr gleich Außendurchmesser der Siebelemente 7 ist, wobei das obere Ende des Einsatzes 75 das Gittersieb 17 ausbildet, das vorzugsweise einstückig mit dem Einsatz 75 ausgebildet ist. Der Durchmesser oder die Öffnungsweite k (Fig.15C) der Sieböffnungen 70 des Gittersiebes 17 und die Dicke C des Gittersiebes 17 sind um ein Vielfaches kleiner als der Durchmesser D der Durchlassöffnungen 5.

### Beispiel:

D = 30mm, C= 2 mm (Faktor F1= 15 mal kleiner) und k = 2,6 mm (Faktor F2= 11,5 mal kleiner)
Die Faktoren Fl, F2 liegen bevorzugt im Bereich 10 bis 30.

Die Dicke C des Gittersiebes 17 (= Durchtrittslänge der Sieböffnungen 70) ist viel kleiner als der Durchmesser D oder die Öffnungsweite der Durchlassöffnung 5, wodurch ein Verlegen des Gittersiebes 17 durch Ablagerungen vermieden werden kann.

Der Durchmesser oder die Öffnungsweite k des Gittersiebes 17 ist ebenfalls viel kleiner als der Durchmesser D oder die Öffnungsweite der Durchlassöffnung 5, wodurch ein Verstopfen der Durchlassöffnungen 5 durch feste Bestandteile, wie Einstreu etc. unterbunden wird.

Das Siebelement 7 sitzt mit seinem Flansch 19 auf der Unterseite der Deckplatte 64 auf, wobei das Gittersieb 17 des Siebelement-Einsatzes 75 gegenüber der Oberseite der Deckplatte 64 geringfügig nach unten versetzt ist, sodass das Pferdehuf mit dem Siebelement 7 nicht in Berührung gelangen kann.

Die Siebelement-Einsätze 75 sind im eingebauten Zustand um einen Abstand, der z.B. 1- 2 mm groß sein kann, gegenüber der Oberseite der Deckplatte 64 nach unten versetzt. Es kann aber auch keine Versetzung vorgesehen sein.

Ferner weist das Siebelement 7 im Inneren die Verstärkungsstege 20 auf, die diametrisch und kreuzförmig angeordnet sind. Das Siebelement 7 und die Verstärkungsstege 20 können dabei z.B. im Spritzguss ausgeführt sein, wobei die Verstärkungsstege der mechanischen Verstärkung dient, um Deformationen, die aufgrund der Last des Pferdegewichts entstehen könnten, entgegenzuwirken.

Das Siebelement 7 lässt somit den Pferdeurin bzw. das Pferdesubstrat in den Ableithohlraum 4 durch und verhindert dabei, dass andere hauptsächliche feste Materialien wie Einstreu, Heu, Stroh oder Pferdemist in die nächsttiefere Ebene eindringen können.

Das Siebelement 7 kann auch in der Deckplatte 64 eingebaut, z.B. einvulkanisiert sein
Mögliche Ausführungsführungsform des Gittersiebs 17:
- Siebgitter mit einer Maschengröße oder Öffnungsweite k der Sieböffnungen 70, z.B. 1 bis 5mm.
Änderungen der Abmessungen und Öffnungsweiten von Gittersieben 17 sind im Rahmen der Erfindung möglich

Die Durchlassöffnungen 5 sind im Querschnitt kreisförmig, also hohlzylindrisch ausgebildet, Durchmesser D z.B. 5mm - 50 mm matrixartig angeordnet, es kann aber jede beliebige andere geometrische Form und/oder Anordnung der Öffnungen 5 gewählt werden, solange die Ableitung der flüssigen Pferdeausscheidungen ohne nennenswerten Flüssigkeitsstau aus der Einstreuschicht 1 erfolgen kann. Die verbleibenden Materialstege zwischen den Öffnungen 5 sind dabei so dimensioniert, dass sie eine ausreichende Festigkeit aufweisen, um bei Gewichtsbelastung durch die Pferdebeine die Integrität der Deckplatte 64 zu gewährleisten, sodass es zu keinen dauerhaften Verformungen oder Zerstörungen kommen kann.

Das Siebelement 7 kann aus einem thermoplastischen Elastomer aus der Gruppe der TPEV oder einem schlagfesten Polypropylen-Copolymer gebildet sein. Diese Materialien haben folgende mechanische Eigenschaften:
Biegemodul 1100 - 1400 MPa, insbesondere 1250 MPa
Zugfestigkeit: 20 - 30 MPa, insbesondere 26 MPa
Schlagzähigkeit: 150 -180 kJ/m2

Mögliche Ausführungsbeispiele der Deckplatte 64:
- Schnittfeste flammhemmende Gummimatte, 1000 mm x 1500 mm (oder auch 1000 mm x 3000 mm), Materialstärke vorzugsweise zwischen 6 mm bis 30 mm, Gewicht zwischen 10 bis 23,5 kg (7kg bis 16 kg/m²), Naturkautschuk (Neuware) Schwarz oder Sonderfarben
- Gummimatte, 1000 mm x 1500 mm, Materialstärke vorzugsweise zwischen 6 mm bis 30 mm, Gewicht zwischen 10 bis 23,5 kg (7kg bis 16 kg/m²), Naturkautschuk - Neuware, Schwarz oder Sonderfarben
- Gummimatte - Recycling, 1000mm x 1500mm, Materialstärke vorzugsweise zwischen 6 mm bis 30 mm, Gewicht zwischen 8 bis 19 kg (5,5kg bis 12,7 kg/m²), überwiegend Recycling Naturkautschuk Schwarz.

Bisherige Einstreuschichten verfolgten das Ziel einer möglichst vollständigen Aufnahme der flüssigen Bestandteile der Pferdeausscheidungen, bevorzugt durch eine hohe Saugfähigkeit des Einstreumaterials. Das auf diese Weise vollkommen durchfeuchtete Einstreumaterial muss daher relativ oft gewechselt werden und vermischt sich mit den festen Pferdeausscheidungen oder Pferdeäpfeln. Aus hygienischen Gründen und der entstehenden Ammoniakausbildung war bisher ein oftmaliges Ausmisten erforderlich, die Ausscheidungen konnten schwer einer weiteren Verwertung zugeführt werden.

Da über das erfindungsgemäße Deckplatte 64 in Kombination mit dem Siebelementen 7 durch entsprechendes Ableiten aus der Einstreuschicht die flüssigen Ausscheidungen von den festen getrennt werden, kann nunmehr eine solche Verwertung viel besser ausgeführt werden. Der Pferdeurin kann abgeleitet und in Tanks oder Güllegruben gesammelt, die Pferdeäpfel können in trockenem Zustand z.B. mittels Mistgabel aufgenommen und gesammelt werden. Für die Ausbildung der Einstreuschicht 2 wird daher im Rahmen der Erfindung - im Gegensatz zu herkömmliche Einstreu - bevorzugt ein möglichst saugarmes Material bzw. saugarme Materialausführung verwendet. Dies trägt zum Wohlbefinden des Pferdes sowie zum erleichterten Ausmisten der Pferdeäpfel bei.

Mögliches Ausführungsbeispiel für die Einstreuschicht 2:
- Einstreuhöhe mindestens 5cm (5 cm sind tierschutzrechtlich vorgegeben) und nicht über 10 cm.
- Holzgranulat mit einem Durchmesser von 3 bis 5 mm bzw. bis 8 mm und einer Länge von 5mm bis 10mm bzw. bis zu 30 mm, entstaubt und thermisch behandelt.

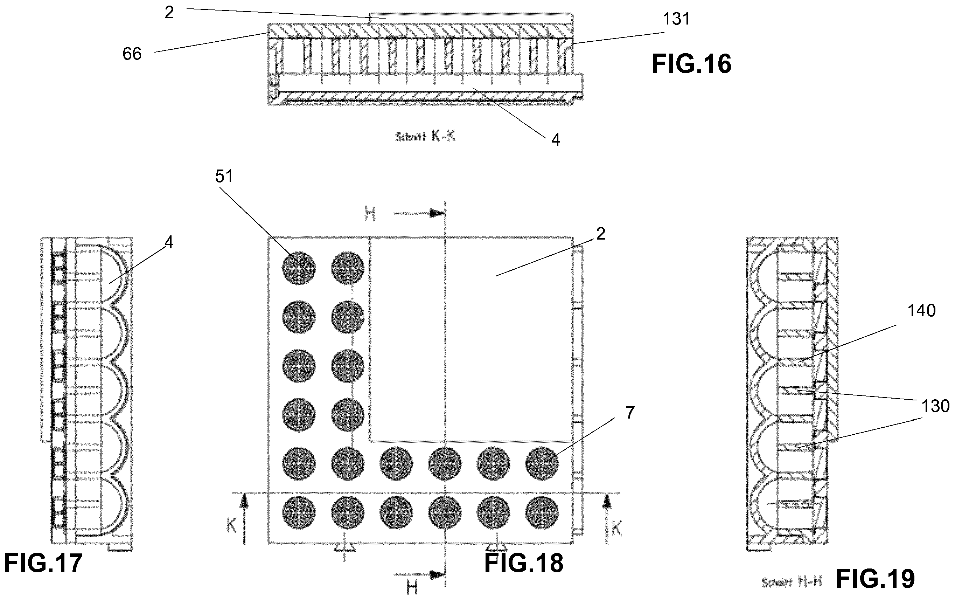

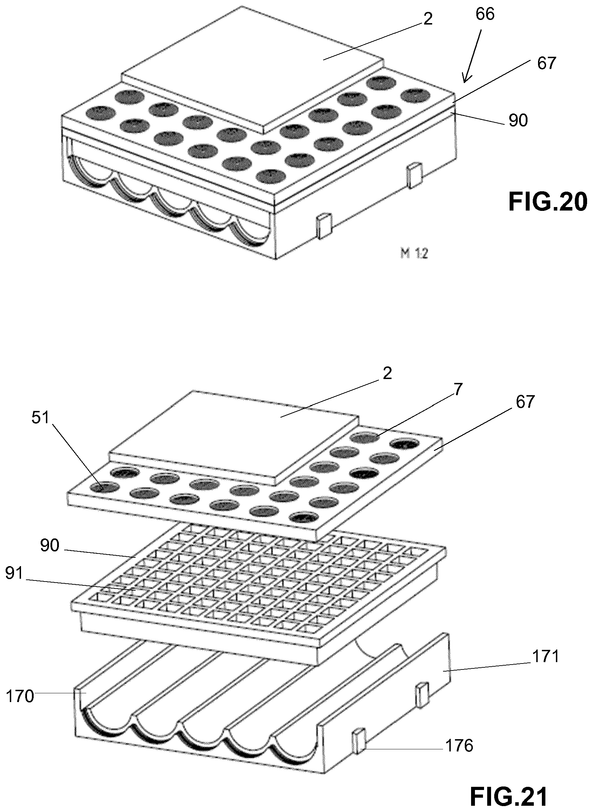

Fig.16 bis 21 zeigen eine weitere Ausführungsform des erfindungsgemäßen Bodenkonstruktionselements, bei der das Deckflächenelement 66 eine Deckplatte 67 und ein tragendes Gitterelement 90 umfasst, das im vorliegenden Ausführungsbeispiel durch ein Trittgitter, z.B. GFK-Gitter, mit rechtwinkelig zueinander verlaufenden Gitterstäben gebildet ist, die rechtwinkelige Gitteröffnungen 91 ausbilden, welches auf die Stützwände aufsetzbar ist.

Auf dem Gitterelement 90 ist die Deckplatte 67 aus einem elastischen Material, z.B. Gummi, angeordnet, wobei die Durchlassöffnungen 51 in der Deckplatte 67 vorgesehen sind, welche Durchlassöffnungen 51 mit den Gitteröffnungen 91 des Gitterelements 90 fluchtend angeordnet sind, sodass die durch die Durchlassöffnungen 51 abrinnenden Ausscheidungen ohne Strömungshindernisse durch die Gitteröffnungen 91 strömen können.

Die flachen Siebelemente 7 mit Sieböffnungen sind dabei in den Durchlassöffnungen 51 der Deckplatte 67 eingelassen oder eingeklebt. Die Dimensionierung der Sieböffnungen entspricht wieder genau dem erfindungsgemäßen Prinzip: Der Durchmesser oder die Öffnungsweite der Sieböffnungen des Siebelements 7 und die Dicke des Siebelements 7 sind um ein Vielfaches kleiner als der Durchmesser der Durchlassöffnungen 51.

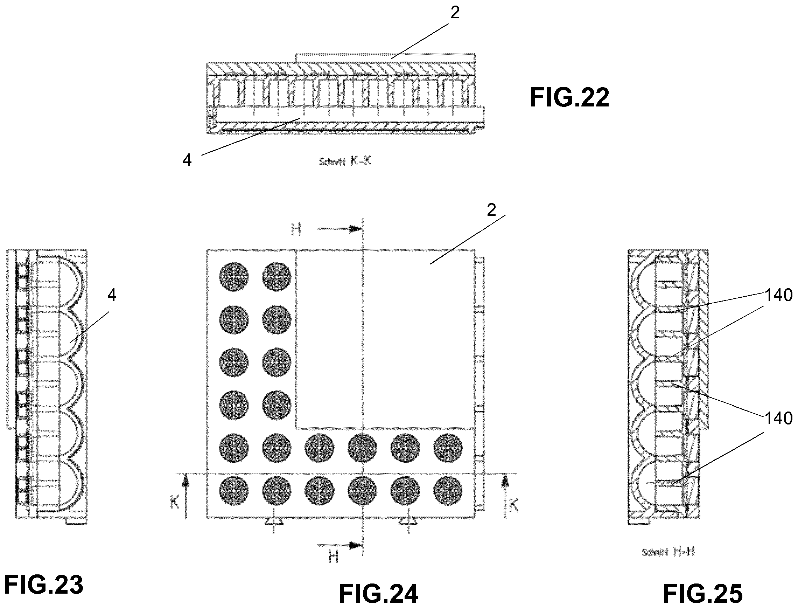

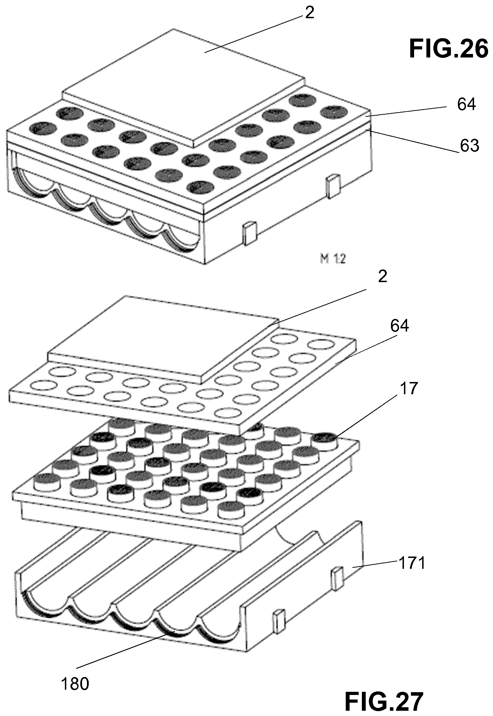

In der weiteren Ausführungsform der Erfindung gemäß Fig.22 bis 27 sind die Siebhülsen 17 nicht mit der elastischen Deckplatte 64 verklebt sondern sind diese zusammen mit der Deckplatte 64 einstückig geformt, z.B. gespritzt.

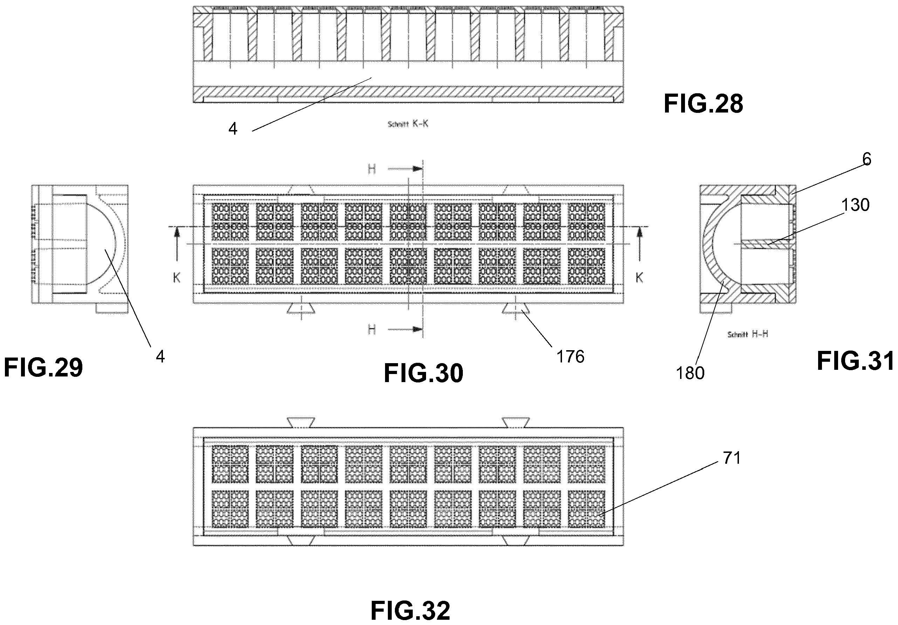

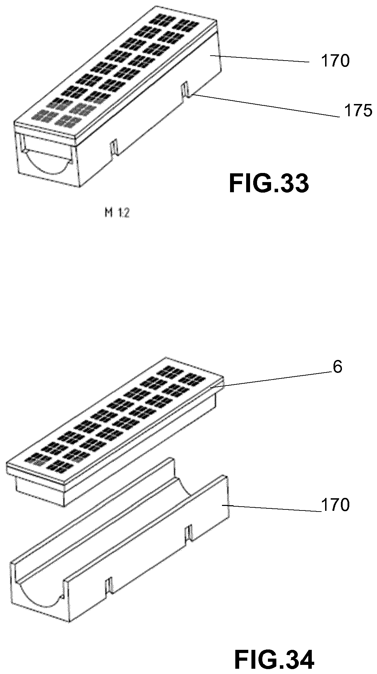

In der weiteren erfindungsgemäßen Ausführungsform gemäß Fig. 28 bis 34 ist das erfindungsgemäße Bodenkonstruktionselement stellt eine schmale Variante der Ausführungsform gemäß den Fig. 1 bis 9 mit nur einer Rinne 180 und einer mittigen Versteifungsrippe 130 dar.

Es können verschiedene Dimensionierungen von vorgefertigten erfindungsgemäßen Bodenkonstruktionselementen beim Einbau in den Stallboden Verwendung finden, wobei die Spalte am Rand durch je nach Bedarf zugeschnittene Randleisten abgedeckt werden können.

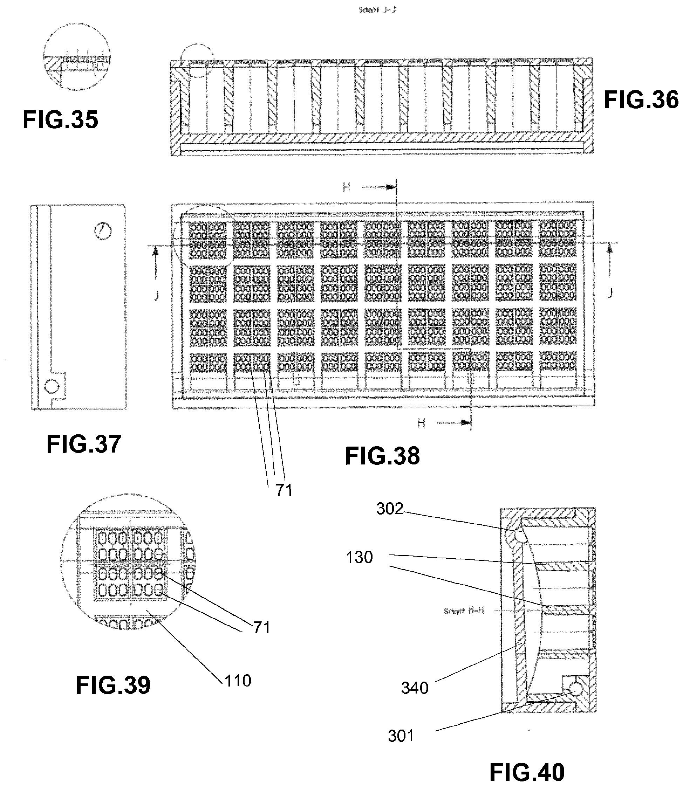

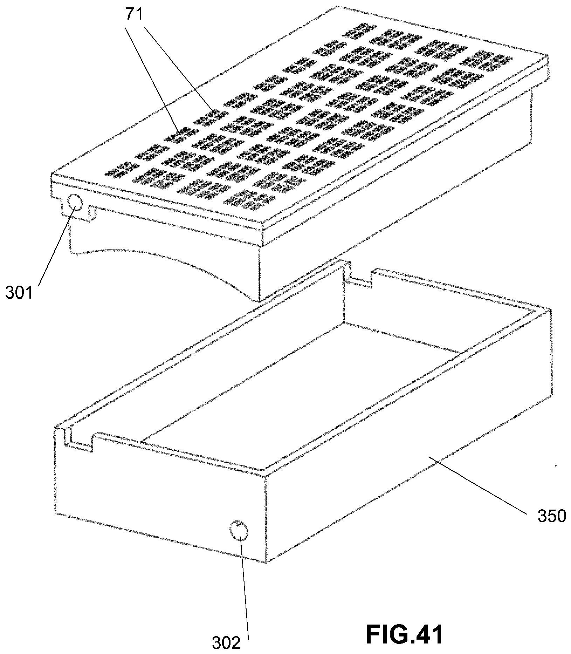

Fig.35 bis 41 zeigen eine weitere Ausführungsform des erfindungsgemäßen Bodenkonstruktionselements mit einer kastenförmigen Abstützvorrichtung 350, bei dem eine Bodenwand 340 als Schrägebene und an der tiefsten Stelle der Schrägebene eine Abflussbohrung 302 zum Anschluss eines Verbindungselements für das benachbarte Bodenkonstruktionselement sowie im Bereich der höchsten Stelle eine Spülleitungsbohrung 301 zum Anschluss an eine Spülleitung ausgebildet ist, über die Spülwasser in den Innenraum des erfindungsgemäßen Bodenkonstruktionselements eingebracht werden kann, um die flüssigen Ausscheidungen über die Abflussbohrung 302 ableiten zu können.

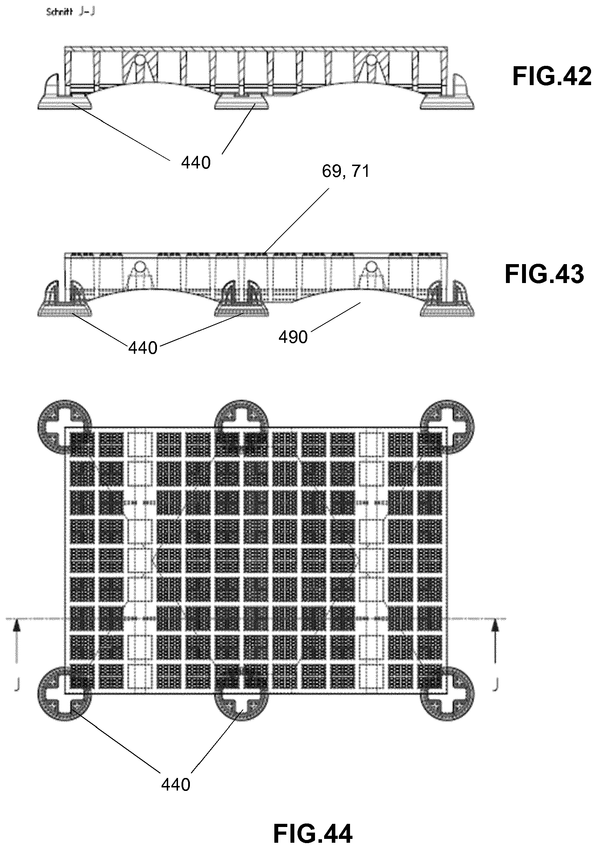

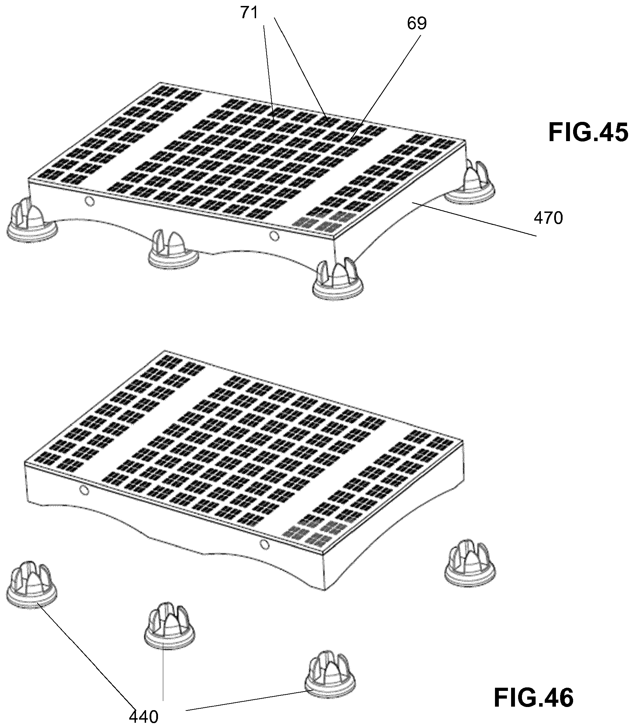

Fig.42 bis 45 zeigen eine weitere Ausführungsform des erfindungsgemäßen Bodenkonstruktionselements, bei dem ein Stützrahmen 470 zur Auflage des Deckflächenelements 69 ausgebildet ist, durch den Spülleitungen hindurchgeführt sind, und der an seiner Unterseite durch Stützfüße 440 gegenüber dem Boden 1 gelagert ist, wobei der Stützrahmen 470 seitliche Ausnehmungen 490 aufweist, durch die die flüssigen Ausscheidungen wegleitbar sind.

## Patentansprüche

1. Bodenkonstruktionselement für einen Pferdeeinstellplatz mit einem Deckflächenelement (6) und einer Abstützvorrichtung zur Abstützung gegenüber einem Boden (1), wobei das Deckflächenelement (6) eine Vielzahl von Durchlassöffnungen (5, 50) aufweist und durch die Abstützvorrichtung zwischen dem Boden (1) und dem Deckflächenelement (6, 64, 66) zumindest ein Ableithohlraum (4) ausgebildet ist, über welchen flüssige Ausscheidungen des Pferdes ausbringbar sind, wobei die Durchlassöffnungen (5, 50) über das Deckflächenelement (6, 64, 66) gleichmäßig verteilt angeordnet sind, wobei zwischen den Durchlassöffnungen (5, 50) Stege (110) zur Abstützung oder Versteifung verlaufen, und wobei die Durchlassöffnungen (50) jeweils durch eine Anordnung von mehreren Sieböffnungen (71) definiert sind, die im Deckflächenelement (6) ausgebildet sind oder in die Durchlassöffnungen (5, 51) ein Siebelement (7) mit einer Vielzahl von Sieböffnungen (70) eingesetzt ist, **dadurch gekennzeichnet, dass** das Deckflächenelement (6) zumindest an seiner Oberseite elastisch oder aus einem elastischen Material ausgebildet ist, um einen guten Stand und die erforderliche Dämpfungswirkung für das Pferd zu bewirken, und dass ausschließlich Sieböffnungen (70, 71) vorgesehen sind, die für die flüssigen Ausscheidungen durchlässig sind jedoch das Eintreten von relativ großen, festen Teilchen in den zumindest einen Ableithohlraum (4) und das Verstopfen der Durchlassöffnungen (5, 50, 51) verhindern, wobei der Durchmesser oder die Öffnungsweite (k) der Sieböffnungen (70, 71) viel kleiner als der Durchmesser D oder die Öffnungsweite der Durchlassöffnungen (5, 50, 51) ist und die Dicke (C) des Siebelements (7) oder die Tiefe der Sieböffnungen (70, 71) viel kleiner als der Durchmesser D oder die Öffnungsweite der Durchlassöffnungen (5, 50, 51) ist.

2. Bodenkonstruktionselement nach Anspruch 1, **dadurch gekennzeichnet, dass** die Durchlassöffnungen (5, 50, 51) matrixförmig angeordnet sind.

3. Bodenkonstruktionselement nach Anspruch 1 oder 2, **dadurch gekennzeichnet, dass** das Deckflächenelement (6) eine Deckplatte (60) umfasst, die an der Unterseite wegstehende Abstützungs- (140) und/oder Versteifungsstege (130) aufweist.

4. Bodenkonstruktionselement nach Anspruch 3, **dadurch gekennzeichnet, dass** die Deckplatte (60) aus einem elastischen Material gebildet ist.

5. Bodenkonstruktionselement nach Anspruch 4, **dadurch gekennzeichnet, dass** an der Oberseite der Deckplatte (60) eine Dämpfungsschicht angebracht oder eine Deckplatte (64) aus einem elastischen Material angeordnet ist.

6. Bodenkonstruktionselement nach Anspruch 3, 4 oder 5, **dadurch gekennzeichnet, dass** die Sieböffnungen (71) in der Deckplatte (60) ausgebildet sind.

7. Bodenkonstruktionselement nach Anspruch 1, 2 oder 3, **dadurch gekennzeichnet, dass** das Siebelement (7) durch einen hohlen Einsatz (75) gebildet ist, der in die jeweilige Durchlassöffnung (5) eingepasst ist, und dass das obere Ende des hohlen Einsatzes (75) ein Gittersieb (17) aufweist.

8. Bodenkonstruktionselement nach Anspruch 7, **dadurch gekennzeichnet, dass** die hohlen Einsätze (75) in die Durchlassöffnungen (5) der Deckplatte (64) eingeklebt oder eingegossen sind.

9. Bodenkonstruktionselement nach Anspruch 1, **dadurch gekennzeichnet, dass** das Deckflächenelement (66) ein tragendes Gitterelement (90) umfasst und auf dem Gitterelement (90) eine Deckplatte (67) aus einem elastischen Material angebracht oder angeordnet ist, wobei die Durchlassöffnungen (51) in der Deckplatte (67) vorgesehen sind, welche Durchlassöffnungen (51) mit Gitteröffnungen (91) des Gitterelements (90) fluchtend angeordnet sind, und dass die Siebelemente (7) in den Durchlassöffnungen (51) der Deckplatte (67) eingelassen oder eingeklebt sind.

10. Bodenkonstruktionselement nach einem der vorhergehenden Ansprüche, **dadurch gekennzeichnet, dass** die Abstützvorrichtung zwei durch eine Bodenwand (173) voneinander beabstandete seitliche Stützwände (170, 171) aufweist, auf die das Deckflächenelement (6) aufsetzbar ist.

11. Bodenkonstruktionselement nach Anspruch 10, **dadurch gekennzeichnet, dass** die Bodenwand (173) der Abstützvorrichtung parallele Rinnen (180) zur Ableitung der flüssigen Ausscheidungen ausbildet, und dass an den Verbindungslinien von benachbarten Rinnen Aufstützflächen (190) ausgebildet sind, auf denen die inneren Abstützstege (140) der Deckplatte (60) im aufgesetzten Zustand des Deckflächenelements (6) aufliegen.

12. Bodenkonstruktionselement nach Anspruch 11, **dadurch gekennzeichnet, dass** die parallelen Rinnen (180) gegenüber den Stützwänden (170, 171) an einem Ende vorspringend und am gegenüberliegenden Ende zurückversetzt ausgebildet sind, sodass die vorspringenden Rinnenabschnitte (181) mit den zurückversetzten Rinnenabschnitten (182) zweier benachbarter Bodenkonstruktionselemente stirnseitig in Eingriff bringbar und mittels Dichtungselement dichtend verbindbar sind.

13. Bodenkonstruktionselement nach Anspruch 10, 11 oder 12, **dadurch gekennzeichnet, dass** an den Außenseiten der einander gegenüberliegenden Stützwände (170, 171) Nut- und Federelemente (176) angeordnet sind, sodass jeweils zwei benachbarte Bodenkonstruktionselemente an ihrer Stützwandseite miteinander in Eingriff bringbar sind.

14. Bodenkonstruktionselement nach Anspruch 10, **dadurch gekennzeichnet, dass** die Bodenwand als Schrägebene und an der tiefsten Stelle der Schrägebene eine Abflussbohrung sowie im Bereich der höchsten Stelle eine Spülbohrung zum Anschluss an eine Spülleitung ausgebildet ist.

15. Bodenkonstruktion mit einem Bodenkonstruktionselement nach einem der Ansprüche 1 bis 9, **dadurch gekennzeichnet, dass** ein Stützrahmen zur Auflage des Deckflächenelements ausgebildet ist, durch den Spülleitungen hindurchgeführt sind, und der an seiner Unterseite durch Stützfüße gegenüber dem Boden (1) gelagert ist, wobei der Stützrahmen Ausnehmungen aufweist, durch die die flüssigen Ausscheidungen wegleitbar sind.

## Claims

1. A floor construction element for a horse shelter including a top surface element (6) and a support structure for supporting said element in relation to a floor (1), said top surface element (6) having a plurality of passage openings (5, 50) and at least one discharge cavity (4) via which liquid excretions of a horse can be discharged being formed by the support structure between the floor (1) and the top surface element (6, 64, 66), said passage openings (5, 50) being uniformly distributed across said top surface element (6, 64, 66), webs (110) extending between said passage openings (5, 50) as supports or bracings and each of said passage openings (50) being defined by an arrangement of several screen openings (71) that are formed in the top surface element (6) or a screen element (7) having a plurality of screen openings (70) being inserted into the passage openings (5, 51), **characterized in that** said top surface element (6) has a flexible upper surface or is formed of a flexible material to allow for the horses to stand comfortably and to provide the necessary damping effect for them and **in that** only screen openings (70, 71) that are permeable for liquid excretions, but prevent relatively large solid particles from entering the at least one discharge cavity (4) and blocking the passage openings (5, 50, 51) are provided, the diameter or the opening width (k) of the screen openings (70, 71) being much smaller than the diameter D or the opening width of the passage openings (5, 50, 51) and the thickness (C) of the screen element (7) or the depth of the screen openings (70, 71) being much smaller than the diameter D or the opening width of the passage openings (5, 50, 51).

2. The floor construction element according to claim 1, **characterized in that** said passage openings (5, 50, 51) are arranged in a matrix.

3. The floor construction element according to claim 1 or claim 2, **characterized in that** said top surface element (6) comprises a cover plate (60) that has support webs (140) and/or bracing webs (130) protruding from its bottom side.

4. The floor construction element according to claim 3, **characterized in that** said cover plate (60) is made of a flexible material.

5. The floor construction element according to claim 4, **characterized in that** a damping layer is applied to the upper surface of the cover plate (60) or a cover plate (64) made of a flexible material is arranged thereon.

6. The floor construction element according to any one of the claims 3, 4 or 5, **characterized in that** said screen openings (71) are formed in said cover plate (60).

7. The floor construction element according to any one of the claims 1, 2 or 3, **characterized in that** said screen element (7) is formed by a hollow insert (75) that is fitted into the respective passage opening (5) and **in that** the upper end of said hollow insert (75) has a screen.

8. The floor construction element according to claim 7, **characterized in that** said hollow inserts (75) are glued or cast into said passage openings (5) of said cover plate (64).

9. The floor construction element according to claim 1, **characterized in that** said top surface element (66) comprises a supporting grid element (90) and a cover plate (67) made of a flexible material is mounted onto or arranged on said grid element (90), said passage openings (51) being provided in said cover plate (67) and aligned with openings in the grid (91) of said grid element (90), and **in that** said screen elements (7) are embedded in or glued into said passage openings (51) of said cover plate (67).

10. The floor construction element according to any one of the preceding claims, **characterized in that** said support structure has two side support walls (170, 171) that are spaced apart by a bottom wall (173) and onto which said top surface element (6) can be placed.

11. The floor construction element according to claim 10, **characterized in that** the bottom wall (173) of the support structure forms parallel drains (180) for discharging liquid excretions and **in that** rest surfaces (190) on which said inner support webs (140) of the cover plate (60) rest, when the top surface element (6) is put on, are formed along the connecting lines of adjacent drains.

12. The floor construction element according to claim 11, **characterized in that** said parallel drains (180) are formed opposite the supporting walls (170, 171) projecting at one end and recessed at the opposite end, so that the projecting drain sections (181) engage with recessed drain sections (182) of two adjacent floor construction elements at end sides and can be connected in a sealing way using a sealing element.

13. The floor construction element according to any one of the claims 10, 11 or 12, **characterized in that** groove and tongue elements (176) are arranged on the exterior sides of said opposite supporting walls (170, 171), so that two adjacent floor construction elements are engageable at their supporting wall sides.

14. The floor construction element according to claim 10, **characterized in that** the bottom wall is formed as an inclined plane and a discharge bore is formed at the lowest point of said inclined plane, while a rinsing bore for connecting a rinsing conduit is formed at its highest point.

15. A floor construction including a floor construction element according to any one of the claims 1 to 9, **characterized in that** a support frame through which rinsing conduits extend and whose bottom side is borne by support foots above the floor (1) is formed for receiving said top surface element, said support frame having recesses through which liquid excretions can be discharged.

## Revendications

1. Elément de construction de plancher pour un abri pour chevaux, ayant un élément de surface de recouvrement (6) et un dispositif d'appui destiné à être appuyé contre un plancher (1), l'élément de surface de recouvrement (6) comportant une pluralité d'ouvertures de passage (5, 50), et au moins une cavité (4) d'évacuation étant formée dans le dispositif d'appui entre le plancher (1) et l'élément de surface de recouvrement (6, 64, 66), par laquelle les excréments liquides du cheval peuvent être évacués, les ouvertures de passage (5, 50) étant réparties uniformément sur l'élément de surface de recouvrement (6, 64, 66), des nervures (110) étant disposées entre les ouvertures de passage (5, 50) pour obtenir un appui ou une rigidification, et les ouvertures de passage (50) étant chacune définies par un assemblage de plusieurs ouvertures de tamis (71) formées dans l'élément de surface de recouvrement (6), ou dans les ouvertures de passage (5, 51) étant inséré un élément de tamis (7) ayant une pluralité d'ouvertures de tamis (70), **caractérisé en ce que** l'élément de surface de recouvrement (6) est élastique ou formé d'une matière élastique au moins sur sa face supérieure afin d'obtenir une bonne posture et l'action d'amortissement nécessaire pour le cheval, et **en ce qu'**uniquement des ouvertures de tamis (70, 71) sont prévues, qui laissent passer les excréments liquides tout en empêchant aux morceaux relativement grands et solides de pénétrer dans l'au moins une cavité d'évacuation (4) et de boucher les ouvertures de passage (5, 50, 51), le diamètre ou la largeur d'ouverture (k) des ouvertures de tamis (70, 71) étant très inférieurs au diamètre D ou à la largeur d'ouverture des ouvertures de passage (5, 50, 51), et l'épaisseur (C) de l'élément de tamis (7) ou la profondeur des ouvertures de tamis (70, 71) étant très inférieures au diamètre D ou à la largeur d'ouverture des ouvertures de passage (5, 50, 51).

2. Elément de construction de plancher selon la revendication 1, **caractérisé en ce que** les ouvertures de passage (5, 50, 51) sont disposées sous la forme d'une matrice.

3. Elément de construction de plancher selon la revendication 1 ou 2, **caractérisé en ce que** l'élément de surface de recouvrement (6) comprend une planche de recouvrement (60), de la face inférieure de laquelle ressortent des nervures d'appui (140) et/ou des nervures de rigidification (130).

4. Elément de construction de plancher selon la revendication 3, **caractérisé en ce que** la planche de recouvrement (60) est formée d'une matière élastique.

5. Elément de construction de plancher selon la revendication 4, **caractérisé en ce que** sur la face supérieure de la planche de recouvrement (60) est attachée une couche amortissante ou une planche de recouvrement (64) constituée d'une matière élastique.

6. Elément de construction de plancher selon la revendication 3, 4 ou 5, **caractérisé en ce que** les ouvertures de tamis (71) sont formées dans la planche de recouvrement (60).

7. Elément de construction de plancher selon la revendication 1, 2 ou 3, **caractérisé en ce que** l'élément de tamis (7) est formé par un insert (75) creux, qui est ajusté dans l'ouverture de passage (5) respective, et **en ce que** l'extrémité supérieure de l'insert (75) creux a un tamis à grille (17).

8. Elément de construction de plancher selon la revendication 7, **caractérisé en ce que** les inserts (75) creux sont collés ou coulés dans les ouvertures de passage (5) de la planche de recouvrement (64).

9. Elément de construction de plancher selon la revendication 1, **caractérisé en ce que** l'élément de surface de recouvrement (66) comprend un élément porteur à grille (90), et **en ce que** sur l'élément à grille (90) est attachée ou disposée une planche de recouvrement (67) constituée d'une matière élastique, les ouvertures de passage (51) étant prévues dans la planche de recouvrement (67), lesdites ouvertures de passage (51) étant disposées de façon alignée avec des ouvertures de grille (91) de l'élément de grille (90), et **en ce que** les éléments de tamis (7) sont insérés ou collés dans les ouvertures de passage (51) de la planche de recouvrement (67).

10. Elément de construction de plancher selon l'une quelconque des revendications précédentes, **caractérisé en ce que** le dispositif d'appui a des parois d'appui (170, 171) latérales, espacées par une paroi inférieure (173), sur lesquelles peut être posé l'élément de surface de recouvrement (6).

11. Elément de construction de plancher selon la revendication 10, **caractérisé en ce que** la paroi inférieure (173) du dispositif d'appui forme des caniveaux (180) parallèles pour l'évacuation des excréments liquides, et **en ce que** sur les lignes de jonction entre des caniveaux adjacents sont formées des surfaces d'appui (190), sur lesquelles reposent les nervures d'appui (140) de la planche de recouvrement (60) dans l'état monté de l'élément de surface de recouvrement (6).

12. Elément de construction de plancher selon la revendication 11, **caractérisé en ce que,** par rapport aux parois d'appui (170, 171), les caniveaux (180) parallèles sont en saillie à une extrémité et en retrait à l'autre extrémité, de sorte que les sections des caniveaux (181) en saillie et les sections des caniveaux (182) en retrait de deux éléments de construction de plancher adjacents peuvent être engagées l'un avec l'autre du côté frontal et reliées de manière étanche par un élément d'étanchéité.

13. Elément de construction de plancher selon la revendication 10, 11 ou 12, **caractérisé en ce que** sur les faces latérales des parois d'appui (170, 171) opposées sont disposés des éléments à rainure et languette (176), de sorte que respectivement deux éléments de construction de plancher adjacents peuvent être engagés l'un avec l'autre du côté de la paroi d'appui.

14. Elément de construction de plancher selon la revendication 10, **caractérisé en ce que** la paroi inférieure est formée comme un plan incliné et qu'à l'endroit le plus bas du plan incliné est formé un alésage d'écoulement, et que dans la zone de l'endroit le plus haut est formé un alésage de rinçage, destiné à être raccordé à une conduite de rinçage.

15. Construction de plancher avec un élément de construction de plancher selon l'une quelconque des revendications 1 à 9, **caractérisé en ce qu'**un cadre d'appui est formé pour poser l'élément de surface de recouvrement, le cadre d'appui étant traversé par des conduites de rinçage et logé sur le plancher (1) au moyen de pieds de support présents sur sa face inférieure, le cadre d'appui ayant des évidements par lesquels les excréments liquides peuvent être évacués.
